# EUROPÄISCHE PATENTSCHRIFT

(11) **EP 1 531 246 B1**
(45) Veröffentlichungstag und Bekanntmachung des Hinweises auf die Patenterteilung: **02.03.2011**
(21) Anmeldenummer: 04021081.7
(22) Anmeldetag: 04.09.2004
(51) Int. Cl.: F02D 11/10, F02D 9/10

(54) **Kontakteinheit**
Contact unit
Unité de contact

(30) Priorität: 15.11.2003 DE 10353432
(43) Veröffentlichungstag der Anmeldung: 18.05.2005
(73) Patentinhaber: Pierburg GmbH, 41460 Neuss (DE)
(72) Erfinder: Schröder, Thomas, 12589 Berlin (DE); Nitsch, Peter, 10781 Berlin (DE); Münich, Marc-Anton, 14476 Gross Glienicke (DE); Glässer, Michael, 12355 Berlin (DE)
(74) Vertreter: Patentanwälte ter Smitten

(56) Entgegenhaltungen:
- EP-A- 1 148 223
- EP-A- 1 191 209
- EP-A- 1 342 896
- DE-A1- 10 112 427
- DE-A1- 19 644 169

## Beschreibung

Die Erfindung betrifft einen Drosselklappenstutzen einer Verbrennungskraftmaschine mit einer Kontakteinheit, mit einer Kontaktplatte, die an einem Gehäuse des Drosselklappenstutzens befestigt ist, Bohrungen zur Aufnahme einer Drosselklappenwelle und einer Antriebswelle, welche über ein Getriebe miteinander in Wirkverbindung stehen sowie Leiterbahnen aufweist und in einem Raum angeordnet ist oder diesen Raum einseitig begrenzt, der durch einen Deckel verschlossen ist, wobei die Leiterbahnen eine elektrische Verbindung zwischen den Kontaktfahnen einer Antriebseinheit und einem Anschlußstecker sowie zwischen den Anschlußkontakten eines Lagesensors und dem Anschlußstecker herstellen, der zweiteilig ausgeführt ist und aus einem Innenteil und einem Außenteil besteht, wobei das Innenteil durch eine Öffnung im Deckel im Gehäuse des Drosselklappenstutzens reicht, mit einer Flanschfläche gegen die begrenzende Innenwand des Deckels oder des Gehäuses anliegt und in dieser Lager durch das von außerhalb des Raumes aufgesteckte Außenteil des Steckers befestigt ist.

Eine solche Vorrichtung ist aus der DE 196 44 169 A1 bekannt. Die hier beschriebene Trägerplatte, welche die Funktion einer Kontakteinheit erfüllt, ist an einem Drosselklappengehäuse befestigt und verbindet einen Anschlußstecker über ihre elektrisch leitenden Bereiche mit einer Antriebseinheit. Dabei können auf der Trägerplatte auch Bahnbereiche eines Drosselklappenpotentiometers zur Erfassung der Stellung einer Drosselklappe angeordnet sein. Der Stecker ist in vordefinierter Position zur Trägerplatte angeordnet und mit der Trägerplatte verbunden oder bildet mit dieser eine Baueinheit.

Eine weitere solche Vorrichtung ist aus EP 1 148223 A2 bekannt. Hier wird eine Kontakteinheit für einen Drosselklappenstutzen offenbart, die eine Kontakteinheit und ein Steckerinnenteil aufweist, die über zwei starre Leiterbahnen miteinander verbunden sind.

Nachteilig an diesen Offenbarungen ist das die relative Lage des Steckers zur Trägerplatte festgelegt ist, so dass je nach zur Verfügung stehendem Bauraum im Motor und daraus folgender notwendiger Änderung der Position des Steckers eine neue Konstruktion der Trägerplatte erforderlich wird. Dies führt bei einer sonst gleichen Ausführung eines Drosselklappenstutzens zu zusätzlichen Konstruktions- und Herstellungskosten.

Des Weiteren offenbart das Dokument EP 1 342 896 A2 einen Drosselklappenstutzen einer Verbrennungskraftmaschine mit einer Kontakteinheit, die eine Kontaktplatte und einen Stecker aufweist, welche durch Leiterbahnen (36) miteinander verbunden sind. Eine gemeinsame Herstellung des Steckers und der Kontaktplatte wird nicht offenbart.

Daher ist es Aufgabe der Erfindung, eine Kontakteinheit bereit zu stellen, bei der die Lage des Steckers zur Kontakteinheit je nach Kundenanforderung unterschiedlich ausgeführt werden kann, ohne die Konstruktion beziehungsweise die Herstellvenfahren ändern zu müssen.

Diese Aufgabe wird dadurch gelöst, dass die Kontaktplatte und das Steckerinnenteil in einem Spritzvorgang gemeinsam hergestellte Kunststoffbauteile sind, welche lediglich durch die Leiterbahnen, welche flexibel ausgeführt sind, miteinander verbunden sind. Während nun die Kontaktplatte in immer gleicher Weise am Gehäuse des Drosselklappenstutzens befestigt wird, kann je nach vorhandenem Bauraum der Stecker entweder in axialer oder in radialer Richtung zur Drosselklappenwelle an verschiedenen Stellen des Deckels oder auch des Drosselklappenstutzengehäuses positioniert werden.

In einer bevorzugten Ausführungsform ist an der Öffnung zur Durchführung des Anschlußsteckers eine Formdichtung angeordnet, welche zumindest formschlüssig mit dem Deckel oder dem Gehäuse verbunden ist. Diese Formdichtung kann beispielsweise am Deckel angespritzt sein, so dass die Montage erleichtert wird und eine zuverlässige Abdichtung sicher gestellt wird.

In einer bevorzugten Ausführungsform ist das Steckeraußenteil vorzugsweise über eine Clipsverbindung am Steckerinnenteil befestigt, wobei die Formdichtung zwischen Innenteil und Außenteil angeordnet ist. Eine solche Verbindung ist einfach beispielsweise über zwei Klemmbacken, die das Steckerinnenteil nach außen gegen das mit der Dichtung versehene Gehäuse oder den mit der Dichtung versehenen Deckel drückt, woraufhin das Steckeraußenteil über diese Klemmbacken auf das Steckerinnenteil geclipst werden kann, zu montieren. Hierdurch wird eine feste und zuverlässige Verbindung ohne zusätzliche Bauteile gewährleistet.

In einer bevorzugten Ausführung weist das Steckeraußenteil einen Axialbund auf, der derart mit einer Flanschfläche des Steckerinnenteils korrespondiert, dass im eingebauten Zustand die Formdichtung zwischen dem Axialbund und der Flanschfläche elastisch verformt ist, wodurch ein dichter Verschluß des innenliegenden Raumes gegenüber der Atmosphäre sicher gestellt wird.

Eine derartige Kontakteinheit ermöglicht die Anpassung der Lage des Steckers am Gehäuse oder am Deckel an die räumlichen Gegebenheiten, so dass ein flexiblerer Einsatz ermöglicht wird. Hierdurch werden Herstell- und Konstruktionskosten und durch den einfachen Zusammenbau Montagekosten eingespart.

Ein erfindungsgemäßer Drosselklappenstutzen ist in den Zeichnungen dargestellt und wird nachfolgend beschrieben.
Figur 1 zeigt einen erfindungsgemäßen Drosselklappenstutzen im zusammen gebauten Zustand in perspektivischer Darstellung.
Figur 2 zeigt eine Kontaktplatte mit einem Steckerinnenteil des erfindungsgemäßen Drosselklappenstutzens in perspektivischer Darstellung.
Figur 3 zeigt in perspektivischer Darstellung einen Deckel des Drosselklappenstutzens mit eingebrachter Formdichtung.
Figur 4 zeigt in perspektivischer Darstellung die Kontaktplatte mit dem Steckerinnenteil mit einem Ausschnitt des Deckels mit der Formdichtung.
Figur 5 zeigt eine Darstellung entsprechend Figur 4 mit aufgesetztem Steckeraußenteil.
Figur 6 zeigt ebenfalls in perspektivischer Darstellung das Aufsetzen des Steckeraußenteils mittels eines verwendeten Werkzeugs.

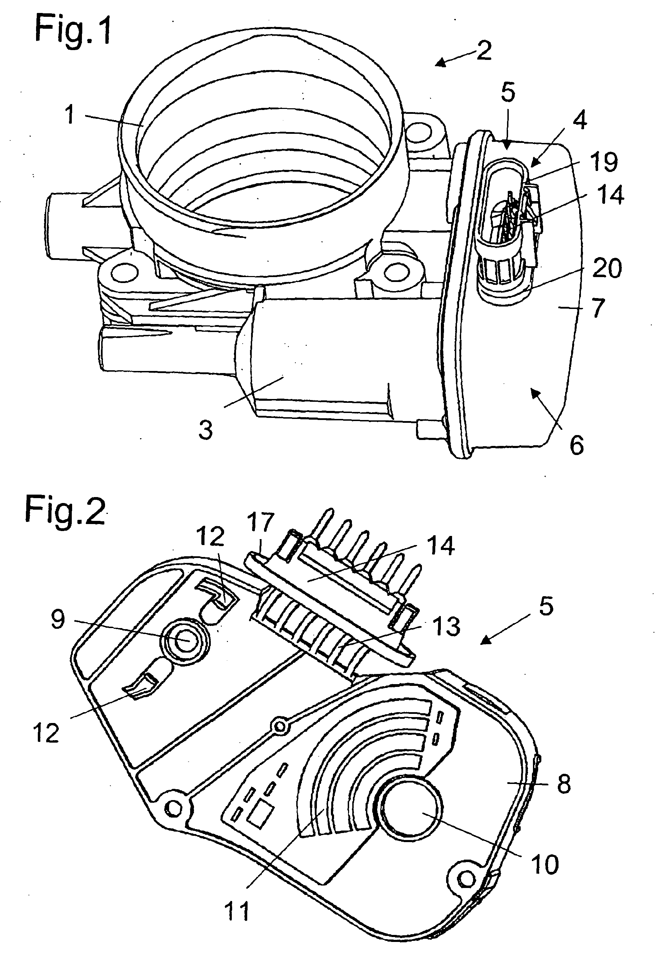

In Figur 1 ist ein Gehäuse 1 eines Drosselklappenstutzens 2 dargestellt, in dem eine nicht dargestellte Drosselklappe angeordnet ist, welche über eine Antriebseinheit und eine Getriebeeinheit in Drehung versetzbar ist. Das Gehäuse 1 des Drosselklappenstutzens 2 weist dazu eine Aufnahme 3 für einen Elektromotor sowie entsprechende Lagerstellen für eine Drosselklappenwelle auf. Die elektrische Kontaktierung zur Steuerung der Drosselklappe erfolgt über einen Stecker 4, der Teil einer erfindungsgemäßen Kontakteinheit 5 ist, welche in einem Raum 6 mit der nicht dargestellten Getriebeeinheit angeordnet ist, wobei der Raum 6 durch einen Deckel 7 verschlossen wird, aus dem der Stecker 4 im vorliegenden Ausführungsbeispiel heraus geführt wird.

Die erfindungsgemäße Kontakteinheit ist in Figur 2 dargestellt. Sie besteht aus einer Kontaktplatte 8, in der zwei Bohrungen 9, 10 angeordnet sind, durch welche die Antriebswelle des Motors sowie die Drosselklappenwelle im zusammen gebauten Zustand reichen. Diese beiden nicht dargestellten Wellen werden durch ein nicht dargestelltes Getriebe in bekannter Weise miteinander verbunden. Auf der Kontaktplatte 8 sind Schleiferbahnen 11 eines Potentiometers angeordnet, welches als Lagesensor dient. Es sei jedoch darauf hingewiesen, dass auch andere beispielsweise berührungslose Lagesensoren an der Kontaktplatte 8 angebracht werden könnten. Die elektrische Kontaktierung zwischen den Schleiferbahnen 11 des Potentiometers sowie zwischen Kontaktfahnen 12 zur Kontaktierung des Elektromotors und dem Anschlußstecker 4 erfolgt über in die Kontaktplatte 8 eingespritzte Leiterbahnen 13. Die Kontaktfahnen 12 stellen beim Anbau der Kontaktplatte 8 an den Drosselklappenstutzen 2 die elektrische Verbindung zu korrespondierenden Kontaktfahnen des Elektromotors her, welche in federndem Kontakt zu den Kontaktfahnen 12 stehen. Die aus der Kontaktplatte 8 heraus geführten Leiterbahnen 13 werden durch ein Steckerinnenteil 14 in eine zueinander vorgebbare Lage fixiert. Dieses Steckerinnenteil 14 wird in einem Spritzvorgang mit der Kontaktplatte 8 hergestellt. Es wird deutlich, dass eine Verbindung zwischen der Kontaktplatte 8 und dem Steckerinnenteil 14 lediglich durch die Leiterbahnen 13 vorhanden ist, wodurch die spätere Einbaulage des Steckers 4 zum Drosselklappenstutzen 2 sowie die Form des Steckers 4 den jeweiligen Kundenvorgaben angepasst werden können, ohne die Form der Kontaktplatte ändern zu müssen.

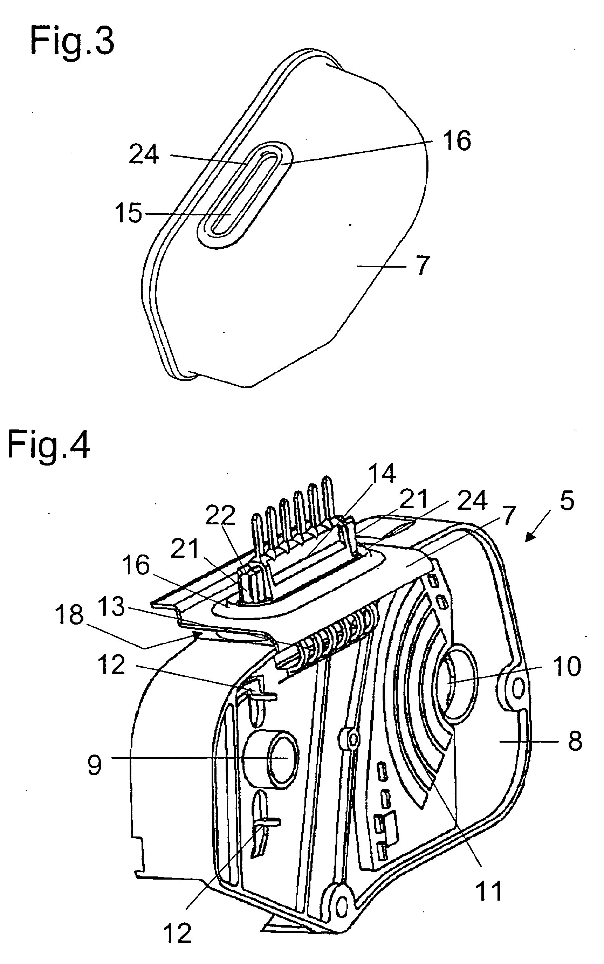

In Figur 3 ist der Deckel 7 ausschnittsweise dargestellt. Dieser weist eine Öffnung 15 auf, durch welche das Steckerinnenteil 14 nach dem Zusammenbau reicht. Die Öffnung 15 wird durch eine Formdichtung 16 begrenzt, welche zumindest formschlüssig am Deckel 7 befestigt ist. Es wäre ebenso denkbar, diese Formdichtung 16 als Anspritzteil auszuführen.

Aus Figur 4 wird die Lage des Steckerinnenteils 14 am Deckel 7 ersichtlich. Das Steckerinnenteil 14 liegt dabei mit einer Flanschfläche 17 derart gegen eine Innenwand 18 des Deckels 7 an, dass durch die Zwischenlage der Formdichtung 16 ein dichter Verschluß beim Zusammenbau entsteht.

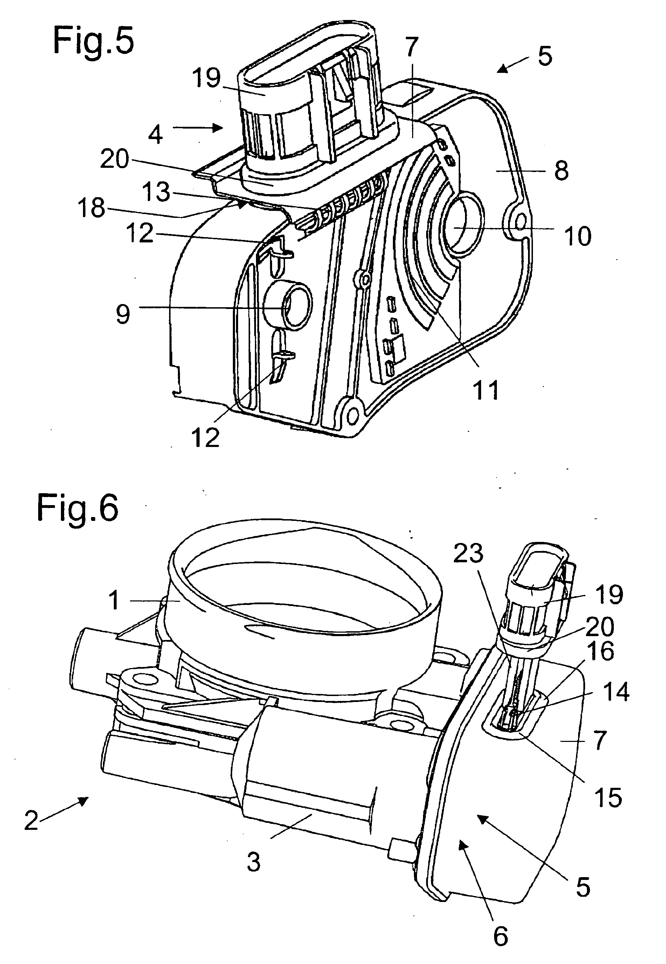

Die entsprechende Lage eines Steckeraußenteils 19 am Deckel 7 ist in Figur 5 zu erkennen. Dabei liegt ein Axialbund 20 des Steckeraußenteils 19 derart gegen die Formdichtung 16 an, dass ein dichter Verschluß nach außen entsteht.

Die Verbindung zwischen Steckerinnenteil 14 und Steckeraußenteil 19 wird über eine Clipsverbindung realisiert, wobei entsprechende in Figur 4 zu erkennende Vorsprünge 21 mit Hakenelementen 22 mit entsprechenden Ausnehmungen im Steckeraußenteil 19 derart korrespondieren, dass eine formschlüssige Verbindung entsteht.

In Figur 6 ist dargestellt, wie die Montage des Steckeraußenteils 19 auf dem Steckerinnenteil 14 erfolgen kann. Das von innen gegen den Deckel geschobene Steckerinnenteil 14 wird dabei von außen durch eine entsprechende Montagevorrichtung 23 in der Anlage gehalten und daraufhin das Steckeraußenteil 19 aufgeschoben, bis die Clipsverbindung greift. Die Formdichtung ist dazu so ausgeführt, dass sie für den dichten Verschluß verformt wird. Dazu ist über den gesamten Umfang der Formdichtung ein Steg 24 an der Formdichtung 16 ausgeführt, der mit dem Axialbund 20 des Steckeraußenteils korrespondiert, so dass eine zusätzliche Verbesserung der Abdichtung erreicht wird.

Es wird deutlich, dass dadurch, dass die Verbindung zwischen der Kontaktplatte 8 und dem Steckerinnenteil 14 nur über die Leiterbahnen 13 erfolgt, die Lage des Steckers am Deckel frei wählbar ist und somit den Platzbedürfnissen im Motor angepasst werden kann. Des Weiteren ist es möglich, die Öffnung 15 nicht im Deckel 7 sondern beispielsweise am Gehäuse 1 des Drosselklappenstutzen 2 anzuordnen, wobei sich der Zusammenbau hierdurch nicht verändert.

Die vorliegende Ausführungsform eignet sich somit zur Anpassung sowohl der Steckergeometrie als auch der Steckerlage am Drosselklappenstutzen beziehungsweise am Deckel der Getriebeeinheit an die entsprechenden Kundenvorgaben, ohne dabei die Spritzformen für die Kontaktplatten anpassen zu müssen. Dadurch werden erhebliche Herstell- und Entwicklungskosten eingespart.

Es wird ersichtlich, dass eine solche Kontakteinheit auch für andere Stellvorrichtungen genutzt werden kann. Desweiteren wird deutlich, dass die Verbindung zwischen den beiden Steckerteilen auch auf andere Art, beispielsweise durch Verschrauben, hergestellt werden kann. Der im Ausführungsbeispiel gewählte Kontakt zum Motor kann bei einem Bürstenmotor auch durch Anbringen einer entsprechenden Bürstenanordnung an der Kontaktplatte verwirklicht werden.

## Patentansprüche

1. Drosselklappenstutzen (2) einer Verbrennungskraftmaschine mit einer Kontakteinheit (5), einer Kontaktplatte (8), die an einem Gehäuse (1) des Drosselklappenstutzens (2) befestigt ist, Bohrungen (9, 10) zur Aufnahme einer Drosselklappenwelle und einer Antriebswelle, welche über ein Getriebe miteinander in Wirkverbindung stehen sowie Leiterbahnen (13) aufweist und in einem Raum (6) angeordnet ist oder diesen Raum (6) einseitig begrenzt, der durch einen Deckel (7) verschlossen ist, wobei die Leiterbahnen (13) eine elektrische Verbindung zwischen den Kontaktfahnen (12) einer Antriebseinheit und einem Anschlußstecker (4) sowie zwischen den Anschlußkontakten eines Lagesensors und dem Anschlußstecker (4) herstellen, der zweiteilig ausgeführt ist und aus einem Innenteil (14) und einem Außenteil (19) besteht, wobei das Innenteil (14) durch eine Öffnung (15) im Deckel (7) oder im Gehäuse (1) des Drosselklappenstutzens reicht, mit einer Flanschfläche (17) gegen die begrenzende Innenwand (18) des Deckels (7) oder des Gehäuses (1) anliegt und in dieser Lage durch das von außerhalb des Raumes (6) aufgesteckte Außenteil(19) des Steckers (4) befestigt ist, **dadurch gekennzeichnet, dass** die Kontaktplatte (8) und das Steckerinnenteil (14) in einem Spritzvorgang gemeinsam hergestellte Kunststoffbauteile sind, welche lediglich durch die Leiterbahnen (13), welche flexibel ausgeführt sind, miteinander verbunden sind.

2. Drosselklappenstutzen (2) nach Anspruch 1, **dadurch gekennzeichnet, dass** an der Öffnung (15) zur Durchführung des Innenteils (14) des Anschlußsteckers (4) eine Formdichtung (16) angeordnet ist, welche zumindest formschlüssig mit dem Deckel (7) oder dem Gehäuse (1) verbunden ist.

3. Drosselklappenstutzen (2) nach Anspruch 2, **dadurch gekennzeichnet, dass** das Steckeraußenteil (19) vorzugsweise über eine Clipsverbindung am Steckerinnenteil (14) befestigt ist, wobei die Formdichtung (16) zwischen Innenteil (14) und Außenteil (19) angeordnet ist.

4. Drosselklappenstutzen (2) nach einem der vorhergehenden Ansprüche, **dadurch gekennzeichnet, dass** das Steckeraußenteil (19) einen Axialbund (20) aufweist, der derart mit einer Flanschfläche (17) des Steckerinnenteils (14) korrespondiert, das im eingebauten Zustand die Formdichtung (16) zwischen dem Axialbund (20) und der Flanschfläche (17) elastisch verformt ist.

## Claims

1. A throttle body (2) of an internal combustion engine comprising a contact unit (5), a contact plate (8) fastened to a housing (1) of said throttle body (2), bores (9, 10) for receiving a throttle shaft and a drive shaft which are operatively connected with each other via a gearing, as well as conductor paths (13), and which is arranged in a chamber (6) or delimits this chamber (6) on one side, said chamber being closed with a cover (7), wherein said conductor paths (13) make an electrical connection between the contact tabs (12) of a drive unit and a connector plug (4), as well as between the connection contacts of a position sensor and the connector plug (4) which is of a two-part structure and is formed by an inner part (14) and an outer part (19), said inner part (14) extending through an opening (15) in the cover (7) or in the housing (1) of the throttle body, wherein a flange surface (17) of said plug abuts on the limiting inner wall (18) of the cover (7) or the housing (1), and wherein the plug is fastened in this position with the outer part (19) of the plug (4) set thereon from outside the chamber (6), **characterized in that** the contact plate (8) and the inner part (14) of the plug are plastic material components formed together in one injection molding process, which parts are interconnected only via the flexible conductor paths (13).

2. The throttle body (2) of claim 1, **characterized in that** a molded gasket (16) is arranged at the opening (15) for the passage of the inner part (14) of the connector plug (4), which gasket is connected with the cover (7) or the housing (1) at least in a positive manner.

3. The throttle body (2) of claim 2, **characterized in that** the outer part (19) of the plug is fastened to the inner part (14) of the plug preferably by means of a clip connection, the molded gasket (16) being arranged between the inner part (14) and the outer part (19).

4. The throttle body (2) of one of the preceding claims, **characterized in that** the outer part (19) of the plug comprises an axial collar (20) corresponding with a flange face (17) of the inner part (14) of the plug such that, in the assembled state, the molded gasket (16) is elastically deformable between the axial collar (20) and the flange face (17).

## Revendications

1. Tubulure à papillon (2) d'un moteur à combustion interne comprenant une unité de contact (5), une plaque de contact (8) montée sur boitier (1) de la tubulure à papillon (2), des perçages (9, 10) pour recevoir un arbre de papillon et un arbre d'entrainement qui coopèrent l'un avec l'autre par un engrenage, ainsi que des pistes conductrices (13), et qui est disposée dans une chambre (6) ou limite cette chambre (6) sur un côté, ladite chambre étant fermée par un couvercle (7), lesdites pistes conductrices (13) établissant la connexion électrique entre les languettes de contact (12) d'une unité d'entrainement et une fiche de connexion (4) ainsi qu'entre les contacts de connexion d'un capteur de position et la fiche de connexion (4), ladite fiche étant réalisée en deux parts et étant formée par un part interne (14) et un part externe (19), ledit part interne (14) s'étendant à travers une ouverture (15) dans ledit couvercle (7) ou dans ledit boitier (1) de ladite tubulure de papillon, s'appuyant sur la paroi interne limitante (18) du couvercle (7) ou du boitier (1) par une face de flanc (17) et étant fixé dans cette position par le part externe (19) de ladite fiche (4) placé sur celui-ci à partir de l'extérieur de ladite chambre (6), **caractérisée en ce que** la plaque de contact (8) et le part interne (14) de la fiche sont des composants en matière plastique produits ensemble dans une opération de moulage par injection, qui ne sont reliés entre eux que par les pistes conductrices (13) qui sont flexibles.

2. Tubulure de papillon (2) selon la revendication 1, **caractérisée en ce qu'**un joint formé (16) est disposé à l'ouverture (16) de passage du part interne (14) de la fiche de connexion (4), ledit joint étant connecté au couvercle (7) ou au boitier (1) au moins de manière positive.

3. Tubulure de papillon (2) selon la revendication 2, **caractérisée en ce que** ledit part externe (19) de la fiche est fixé au part interne (14) de la fiche de préférence par une connexion de clipsage, ledit joint formé (16) étant disposé entre le part interne (14) et le part externe (19).

4. Tubulure de papillon (2) selon l'une quelconque des revendications précédentes, **caractérisée en ce que** le part externe (19) de la fiche comprend un collet axial (20) correspondant avec une face de flanc (17) dudit part interne (14) de la fiche de sorte qu'en état assemblé, le joint formé (16) est déformé élastiquement entre le collet axial (20) et la face de flanc (17).
